# EUROPEAN PATENT APPLICATION

(11) **EP 1 737 211 A1**
(43) Date of publication of application: **27.12.2006**
(21) Application number: 05105659.6
(22) Date of filing: 24.06.2005
(51) Int. Cl.: H04N 1/40

(54) **Multilevel frequency modulation halftone screens and method for making same**

(71) Applicant: AGFA-GEVAERT, 2640 Mortsel (BE)
(72) Inventor: Van Garsse, Joris, c/o AGFA DOTRIX N.V., 2640, Mortsel (BE)

(57) **Abstract**

A method is disclosed for calculating a set of threshold masks for the purpose of digital halftoning printing using multiple colorants. The method is computationally efficient and produces dot distributions of which the power spectrum has blue noise characteristics. The method makes use of a single valued function with a limited two-dimensional domain.

The dot distributions corresponding to different colorants are optimized with regard to each other to minimize the visibility of graininess.

The method enables to drive printers that are capable to render three density levels per pixel or more.

## Description

### FIELD OF THE INVENTION

The present invention relates to a digital image processing method. More specifically the invention relates to a method for digital halftoning of continuous tone images for printing purposes. Even more specifically, the invention relates to frequency modulation halftoning techniques that use threshold masks. Even more specifically, the invention relates to frequency modulation halftoning techniques that support printing devices that can print two or more density levels per pixel.

### BACKGROUND OF THE INVENTION

Inkjet printing works by jetting ink droplets through a nozzle onto a substrate. By applying mechanical or thermal energy to ink in a small chamber, a pressure wave is created that propels a miniscule ink droplet at high speed through the nozzle towards a substrate.

The pressure wave is controlled by shaping the length and the profile of the electrical waveform that is applied to the thermal or mechanical transducer in the ink chamber.

Because the operating conditions for creating a pressure wave that is effective for the purpose of ink jetting depend on such parameters as the physical dimensions of the ink chamber and the nozzle and the viscosity, compressibility, specific mass and surface tension of the ink, they tend to be very narrow.

As a result, many inkjet processes are optimized for printing with a substantially fixed sized ink droplet and corresponding density per pixel.

By jetting at a high frequency a variable number of micro droplets that coagulate before the ink lands on the printable substrate, the effect of droplets having a variable volume can be created. These droplets with a variable volume result in pixels with a variable density on the printable substrate.

The tone resolution of such a printing system, however, is usually too limited to render high quality graphics and continuous tone images.

Therefore digital halftoning techniques have been developed for the rendering of continuous tone images and graphics on devices with limited tone resolution.

Digital halftoning techniques are generally subdivided into two classes: amplitude modulation halftoning (also called clustered dot halftoning) and frequency modulation halftoning (also called dispersed dot halftoning). An overview of the characteristics of both techniques is given in the book "Digital Halftoning" by Robert Ulichney, published by MIT press.

Clustered dot halftoning relies on a geometrical arrangement of halftone dots that is characterized by a set of fixed frequencies and angles. The tone values are modulated by changing the size of the halftone dots on the grid.

Frequency modulation halftoning relies on changing the average distance between essentially fixed sized halftone dots to modulate the tone values.

Hybrid forms of digital halftoning also exist wherein both the size or density and the average distance of halftone dots are modulated.

The term binary halftoning is commonly used to refer to halftoning techniques that are adapted for devices that can render only two tone levels per pixel corresponding to printing ink or no ink. These devices are referred to as binary printing devices.

The term multilevel halftoning is commonly used to refer to halftoning techniques that are adapted for devices that can render more two tone levels per pixel corresponding to printing with various densities of ink or with various sizes of ink spots. These devices are referred to as multilevel printing devices.

Both because inkjet printing inherently reconstructs an image using dispersed dots, and because - at a given resolution - frequency modulation halftoning techniques potentially produce better image quality than amplitude modulation, frequency modulation has been the preferred digital halftoning method in inkjet printing.

The class of frequency modulation halftoning techniques itself can be further subdivided into a first subclass that uses an algorithmic approach - called error diffusion - to convert a continuous tone image into a frequency modulated halftone, and a second subclass that uses pre-calculated threshold masks for this purpose.

A desirable characteristic of a frequency modulation halftoning technique is that it produces dot distributions that have "blue noise" spectrum, i.e. of which the power spectrum has less energy at lower frequencies than at higher frequencies. Error diffusion algorithms are known to have this desirable property and therefore enable to produce halftone dot distributions of excellent image quality.

An improvement over the standard error diffusion process that is relevant with regard to the current invention is described in US 6,637,851 by Koen Van de Velde. In this patent, a technique is described that optimizes the relative position of dots printed with different colorants. The method achieves several technical advantageous effects. It produces more homogeneous dot distributions, not only in tints printed with a single colorant but also in tints printed with multiple colorants. A second advantage is that the homogeneous dot distributions improve the drying characteristics of the colorant and enable better color saturation in the highlights.

Multilevel error diffusion techniques have been described in the art, for example in US 6,637,851 by Van de Velde.

A disadvantage of the error diffusion algorithm is that it requires relatively many computations because of the complexity of the algorithm. For high speed image processing this translates into the requirement of developing dedicated computing hardware, which is costly and takes time to develop. Another problem is that, in the case of multilevel halftoning, the error diffusion algorithm offers few options to control the trade off between modulating the number of halftone dots and the density levels of said halftone dots.

Several other methods have been described that require fewer ad hoc computations by relying on pre-calculated dot patterns or threshold masks.

US Pat. No. 5,214,517 by Sullivan et all describes the use of a set of e.g. 256 pre-calculated bitmaps, each one corresponding to a tone level ranging from 0 to 255 in a continuous tone image. Each bitmap represents a distribution of halftone dots to render the corresponding tone level, and is calculated - using an iterative optimization process - to produce a power spectrum with minimal visual noise. In addition is the correlation between the bitmaps constrained, so that no disturbing phase shifts are introduced in a tonal gradient of an image. The bitmaps are typically square having a size of e.g. 256 by 256, and are replicated (i.e. "tiled") horizontally and vertically across the two-dimensional addressable printer space like tiles on a floor. A major disadvantage of this approach is that it requires a lot of memory. If the size of the bitmaps is 256 by 256 pixels, and 256 bitmaps are needed for as many tone levels, than 2 Mbytes of memory have to be provided. Another disadvantage of this method is that the bitmaps can not be used in standard Raster Image Processors (RIP's) that are used for the rendering of PostScript® of PDF® documents, because these devices perform halftoning using threshold masks.

In the document US Pat. No. 5,111,310, Mitsa and Parker disclose a technique to build a square threshold mask that is replicated horizontally and vertically to yield a threshold value at every pixel position of a page for the purpose of frequency modulation halftoning. Such a square threshold mask is compatible with standard Raster Image Processors, and requires only one byte per element. By comparing every pixel in the image with a corresponding threshold in the threshold mask, it is determined if at the corresponding location a halftone dot is printed or not.

The way the square threshold mask is calculated in the previous method is by accumulating successive levels of stochastic dot patterns on top of each other. Every higher level uses the dot distribution of the lower level plus additional dots. To determine which dots are to be added, a blue noise filter is applied on the dot distribution using the Fourier transform. By comparing the original dot distribution with the filtered dot distribution, it is determined at which locations dots should be added to optimally preserve the blue noise characteristics.

The threshold mask is obtained this way produces halftone dot distributions that have blue noise characteristics.

Once a threshold mask (which Mitsa and Parker refer to as a "blue noise mask") has been calculated using the previous method, the frequency modulation halftoning of an image requires fewer ad hoc calculations than the error diffusion method and less memory than the technique invented by Sullivan en al. The calculation of the threshold mask according to this method, however, is complicated and lengthy as it involves many transformations back and forth between the spatial and the frequency domain.

US Pat. No. 5,535,020 by R. Ulichney describes an alternative technique to calculate a threshold mask. By applying a void and cluster filter (e.g. a low pass filter) on a dot distribution, the voids (places in the distribution where there is a local shortage of dots) and the clusters (places in the distribution where there is a local excess of dots) are identified. This information forms the base to decide where to add or to remove halftone dots for the rendering of a higher or a lower density. Just like in the previous method successive dot profiles are accumulated to obtain a threshold mask. The calculation of the threshold mask to this method is also complicated and lengthy as the filtering in the spatial domain using a void and cluster filter requires many computations.

US Pat. 6,833,933 by Michael Woods describes the use of a distance function to evaluate different candidate positions to add or remove a halftone dot. Just like in the previous methods successive dot profiles are accumulated to obtain a threshold mask. The calculation of the threshold mask to this method is complicated and lengthy as the evaluation of many candidate positions requires many computations.

In US 5,822,451 by Spaulding, a technique is described for frequency modulation of color images by means of threshold masks for printing with multiple colorants wherein two or more of the threshold masks are designed jointly to minimize a visual cost function. The visual cost function uses different weights for different colorants. The method suggests the use of combinatorial optimization techniques in combination with said visual cost function to determine optimal dot distributions, from which then threshold masks can be derived.

US Pat. No. 5,276,535 by R. Levien describes a technique to reduce internal moire effects found in amplitude modulation halftoning of images. According to the technique, the grayscale order of an original tile is modified by the addition of a bump function at each point in the original cell in order of grayscale. The new grayscale order is stored in a new tile. Adding the bump function at the chosen point in the original tile influences the choice of the next pixel in the grayscale. This method addresses the technical problem of internal moire that is specific for amplitude modulation halftoning and does not occur in frequency modulation halftoning. Furthermore is the method specifically designed to improve the image quality of an existing threshold matrix, rather than that it can serve for the purpose of calculating an original threshold matrix.

Multilevel techniques using threshold masks have been described in the art, for example in the document US5,903,713 by Daels. These techniques, however, are mostly described in the context of periodic halftoning. The specific problems and solutions related to stochastic multilevel halftoning techniques, however, are not addressed in the documents relating to the state of the art. One of these problems is a need to control the balance between changing the number of halftone dots and changing the density of halftone dots when reproducing various densities in an image.

From the above analysis of the state of the art, it follows that a need exists for an alternative and improved method to calculate a threshold matrix for the purpose of frequency modulation digital halftoning.

Specifically a need exists for a method to create a frequency modulation halftone tile that is efficient from the viewpoint of number of calculations and that produces high image quality dot distributions with blue noise characteristics.

A need also exists for an improved and alternative mask based frequency modulation technique that optimizes the relative positions of halftone dots in the case of printing with multiple colorants.

Furthermore a need exists for a mask based frequency modulation technique that optimally supports the multilevel capabilities of devices that can print with more than two densities of ink dot sizes.

### SUMMARY OF THE INVENTION

The invention realized by a method having the specific features set out in claim 1. Specific features for preferred embodiments of the invention are set out in the dependent claims.
Further advantages and embodiments of the present invention will become apparent from the following description and drawings.

### BRIEF DESCRIPTION OF THE DRAWINGS

Figure 1 shows a print head having nozzles.
Figure 2 shows the formation of ink droplets having a variable volume according to an embodiment of the current invention.
Figure 3 shows a printing system according to an embodiment of the current invention.
Figure 4 shows a print head comprising multiple columns of nozzles.
Figure 5 shows a print head assembly comprising multiple print heads.
Figure 6 shows a data processing system according to an embodiment of the current invention.
Figure 7 shows a printer controller according to an embodiment of the current invention.
Figure 8 shows an arrangement that uses a threshold array to convert a continuous tone image into a halftoned image according to an embodiment of the current invention.
Figure 9 explains the principle of converting a continuous tone image into a binary halftoned image according to an embodiment of the current invention.
Figure 10 explains the principle of converting a continuous tone image into a multilevel halftoned image according to a first embodiment of the current invention.
Figure 11 explains the principle of converting a continuous tone image into a multilevel halftoned image according to a second embodiment of the current invention to calculate a single threshold mask.
Figure 12A and 12B show a flow chart to explain a method according to an embodiment of the current invention.
Figure 13A shows a single valued function z=f(x,y) having a two dimensional (x,y) domain according to an embodiment of the current invention.
Figure 13B shows the use of a single valued function z=f(x,y) to calculate a matrix representing a table function z=f(i,j) according to an embodiment of the current invention.
Figure 14A, 14B, 14C and 14D show various shapes and orientations of the (x,y) domain of a single valued function z=f(x,y) according to various embodiments of the current invention.
Figure 15A, 15B, 15C and 15D show various function profiles z=f(d) that can be used to define a single valued function z=f(x,y) according to various embodiments of the current invention.
Figure 16 shows a preferred embodiment of a single values function z=f (x, y) .
Figure 17 shows an example of a parent matrix according to an embodiment of the current invention.
Figure 18 shows an example of a set of children matrices derived form a parent matrix in Figure 17 using one of the methods according to the current invention.
Figure 19 shows a look up table to transform values of an order number table according to an embodiment of the current invention.
Figure 20 shows a flow chart to explain a method according to an embodiment of the current invention to calculate multiple threshold masks.
Figure 21 shows a flow chart to explain a method according to an embodiment of the current invention to calculate multiple threshold masks.
Figure 24 explains different steps to calculate multiple threshold masks according to an embodiment of the current invention.
Figure 25 explains different steps to calculate multiple threshold masks according to an embodiment of the current invention.

### DETAILED DESCRIPTION OF THE INVENTION

### printing

The method according to the current invention is directed towards the use in inkjet printers and specifically drop-on-demand inkjet printers. The term printing as used in the invention refers to the process of creating a structured pattern of ink markings on a substrate.

### ink

The ink could be a conventional pigmented or dyed ink or colorant, but it could also be wax, a water repellent substance, an adhesive or a plastic. Typically, ink is not a pure compound, but a complex mixture comprising several components such as dyes, pigments, surfactants, binders, fillers, solvents, water and dispersants, each component serving a specific function. The ink could also be a material of which the viscosity or phase changes with temperature, such as wax. Specifically mentioned also are inks that polymerize, for example under influence of electromagnetic radiation such as UV light. This process is called UV curing.

### substrate

The substrate could be paper, but it could also be textile, a synthetic foil or a metal plate or any other printable substrate as known in the art. Examples includes the use of inkjet printing (drop-on-demand and continuous) to create printing masters for offset printing, to print on packages in cardboard or plastic, to print decorative images. The unprinted substrate can be available either on roll or as a pile of separate, usually rectangular sheets. The substrate is characterized by a width called substrateWidth. When the substrate is on roll, this width corresponds with the width of the roll. When the substrate is available as a rectangular sheet, this width corresponds with one of the two dimensions of said rectangular sheet, for example the shortest dimension of said sheet.

### description of a system

### single print head

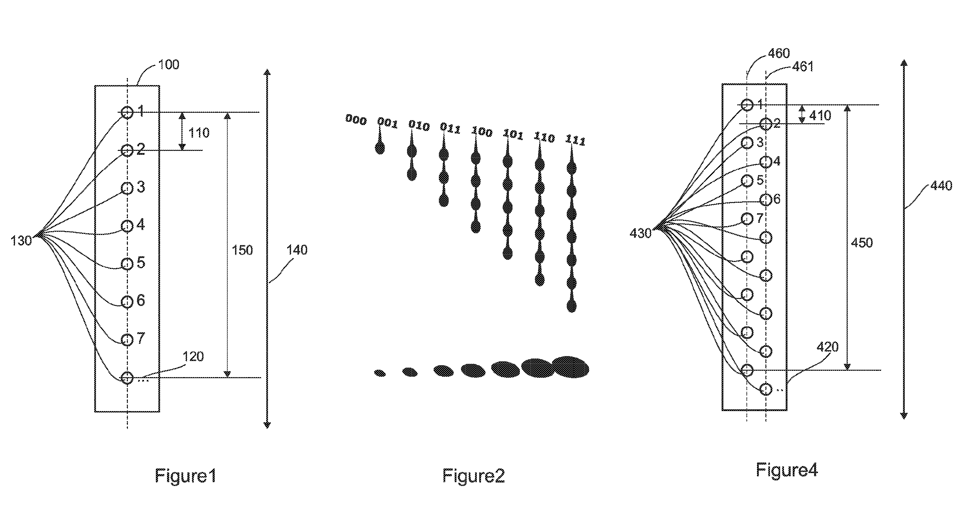

Referring to an embodiment shown in Figure 1, an array of transducers, ink chambers and a nozzles 130 - etched in a nozzle plate - together make up a print head 100. The inkjet nozzles 130 can be operated in parallel and produce droplets with a fixed or a variable volume.

### variable droplet volume

According to one embodiment, the volume of a droplet is modulated by means of a variable number of micro-droplets. Figure 2 shows a case that the number of micro-droplets can vary between 0 and 7. Because the micro-droplets are so tiny, the air friction subjects them to substantial deceleration, and as a result, the micro-droplets coagulate into one single droplet having a variable volume by the time it lands on the printable substrate. The volume of these droplets is referred to by the number of micro-droplets of which said droplet consists. More specifically in the example shown in Figure 2, the volume of a droplet having a variable size is referred to by an integer number ranging from 0 to 7 (represented by binary numbers in Figure 2).

Different droplet volumes when printed result in different sizes of ink spots and different measured densities on the printed substrate.

In what follows, the tone resolution of a printing device shall refer to the number of density values that can be printed by a given device at a pixel position with a single ink.

### printing device

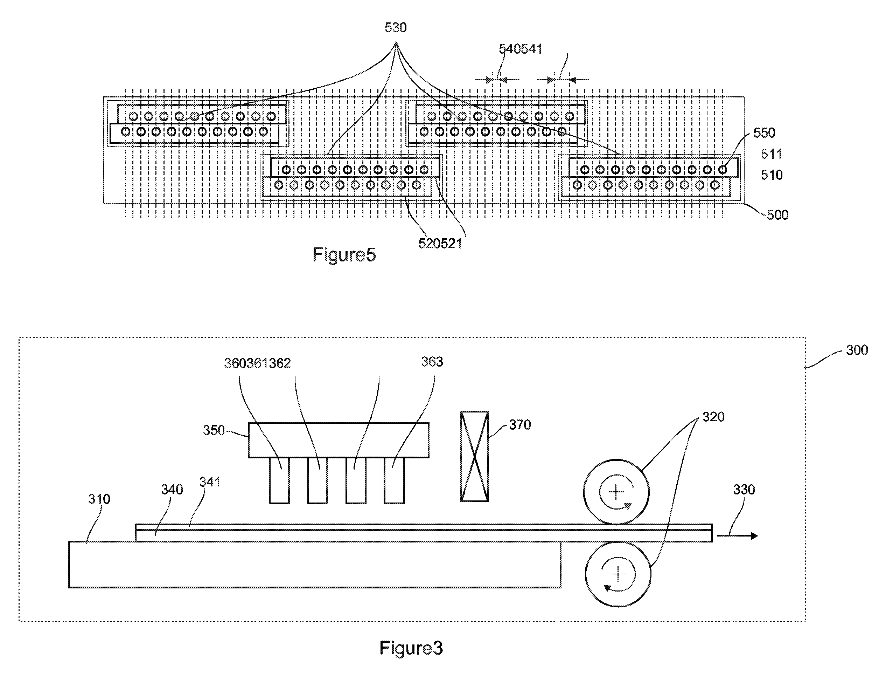

According to a preferred embodiment and referring to Figure 3, printing an image of a document using a printer 300 is achieved by moving a substrate 340 having an ink-receiving layer 341 relative to a page-wide print head assembly 350 by means of a substrate transport mechanism and selectively jetting ink droplets on said substrate in response to said image of said document.

In Figure 3, the substrate 340 rests on a substrate support 310.
Figure 3 shows not one but multiple printing heads. In one embodiment four print heads (360, 361, 362, 363) are used that print with cyan, magenta, yellow and black ink. These heads are mounted on a print head support 350. Not shown on Figure 3 are the ink reservoirs and the tubes that are necessary for operating the printing device.

In one embodiment, the inks spots on the substrate that result from droplets jetted by different heads are allowed to physically mix before they are cured. This technique of jetting subsequent droplets without intermediate curing is referred to as wet-on-wet printing.

Figure 3 also shows a curing station 370 for curing the printed inks after they have been printed on the substrate. In one embodiment, the curing station is a UV source that radiates energy having a spectrum that causes curing of the ink.

### slow and fast scan orientation and direction

Referring to Figure 3, the orientation that corresponds with the movement of substrate relative to the print head is called the fast scan orientation. The direction 330 in which the substrate moves relative to the print head shall be called the fast scan direction.

The orientation perpendicular the fast scan orientation is called the slow scan orientation. According to a preferred embodiment and referring to Figure 3, the orientation of an array of nozzles belonging to a print head is parallel to the slow scan orientation.

In the following text, the i-orientation shall by convention mean the fast scan orientation and the j-orientation the slow scan orientation, although the current invention also works using a different convention.

### addressable grid of pixels

The positions on the substrate where a droplet can be printed form an addressable grid of pixels. By convention, we refer to sets of pixels on the addressable grid that are aligned with a fast scan orientation as rows of pixels and sets of pixels that are aligned with a slow scan orientation as columns of pixels. The addressable grid of pixels is also called a raster, comprising raster lines that are parallel to a fast scan orientation. In general a raster line shall refer to a line of pixels parallel to the fast scan orientation, and is indexed by means of a [i] coordinate. A column of pixels is indexed by a [j] coordinate. A pixel in an addressable grid is hence addressed using a set of [i,j] coordinates.

### array of nozzles

Referring to Figure 1, each nozzle of a print head can be indexed by means of a nozzle index nozzleIndex that ranges from 1 to nbrNozzles. The shortest distance between two nozzles 130 along the slow scan orientation 140 is called the nozzle pitch 110 and is indicated by the parameter nozzlePitch. The length 150 of a nozzle array can be expressed as a multiple of the length of slowScanPitch and is indicated by a parameter headSize.

A set of pixels that can be addressed by the nozzles of a print head during one movement along the fast scan orientation is called a swath. The size of a swath is measured in an orientation parallel to the slow scan orientation is called swathSize. According to a preferred embodiment, the swath size is equal to or larger than the image of a document so that all the pixels of said document can be printed in one swath.

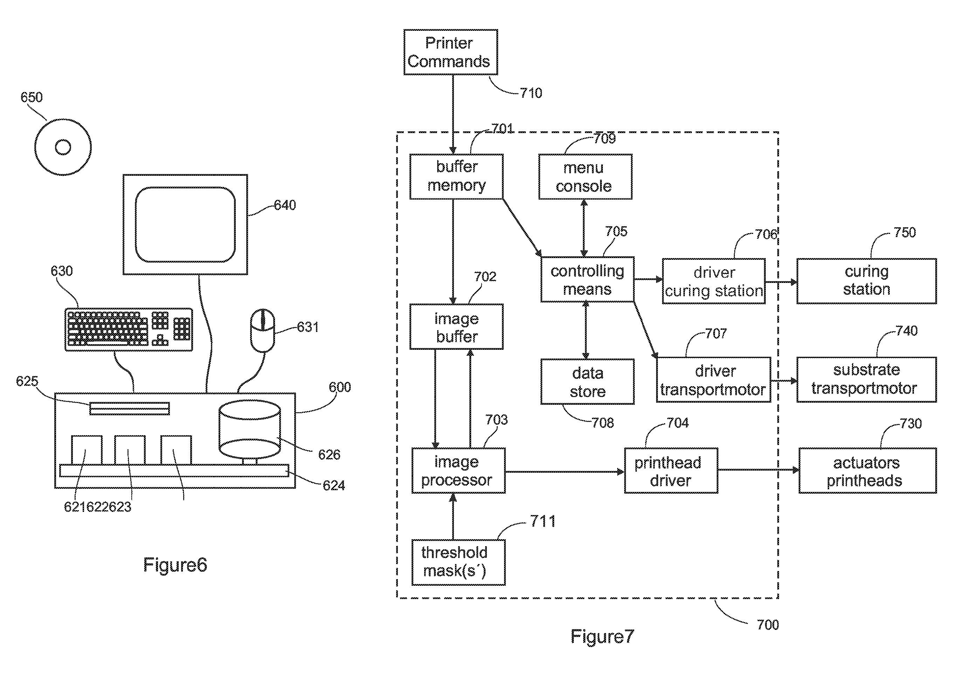

Referring to Figure 4, the nozzles 430 of an array may be staggered for constructive reasons along two or more columns (460, 461). In that case, the nozzle pitch 410 is defined as the shortest distance between two lines perpendicular to the slow scan orientation and going through the centers of the staggered nozzles.

If a print head contains staggered arrays of nozzles, the timing of the firing of droplets from nozzles belonging to different rows is preferably adjusted so that the pixels belonging to a same line parallel to the slow scan orientation in the image of a document also land on the same line parallel to the slow scan orientation on the printed image. By adjusting the timing this way, the processing to prepare the signals for the nozzles can be the same as if all the nozzles were virtually on one and the same line.

According to a preferred embodiment of the current invention, not one head is used but a sub-assembly of preferably two heads that are mounted back to back. Each individual print head comprises one row of 318 nozzles having a nozzle pitch of 169 micrometer, which corresponds to 59,2 nozzles per cm or 150,3 nozzles per inch. The transducers in the print heads are of the electro-mechanical type and are built using piezoelectric materials.

Referring to Figure 5, a second head 520 is displaced over exactly half a nozzle pitch 541 with regard to a first head 521, so that a sub-assembly 530 is obtained that can print at twice the resolution of the original heads. So the sub-assembly is effectively equivalent to a single print head having two rows of 318 nozzles and having a nozzle pitch of 85,5 micrometer, which corresponds to 118,4 nozzles per cm or 300,6 nozzle per inch.

According to said preferred embodiment and referring to Figure 5, the swath size is increased by mounting a plurality of sub-assemblies 530 of print heads in a staggered fashion to form a print head assembly 500. The sub-assemblies are displaced along a slow scan orientation over a distance so that any of the nozzle positions is essentially spaced along a slow scan orientation at a distance from any other nozzle position over a distance that is an integer number times the nozzle pitch 540. This is also indicated by the grid of dotted lines parallel to a fast scan orientation in Figure 5.

The sub-assemblies 530 may or may not have overlapping nozzles. The timing of the firing of droplets from nozzles belonging to different print head sub-assemblies is preferably adjusted so that the pixels belonging to a same line parallel to the slow scan orientation in the image of a document also land on the same line parallel to the slow scan orientation on the printed image. By adjusting the timing this way, the processing to prepare the signals for the nozzles can be the same as if all the nozzles were virtually on the same line.

According to said preferred embodiment, a set of four print head assemblies are used that print with different inks, such as with cyan, magenta, yellow and black inks or with inks having a different tint and or density.

Also according to said preferred embodiment, the nozzles belonging to a different print head assembly are lined up along the fast scan orientation so that nozzles belonging to a different head assembly but having the same nozzle index print on the same raster line during the same swath.

A relation exists between the print resolution slowScanResolution along a slow scan orientation and the nozzle pitch. More specifically

### slowScanResolution=1/nozzlePitch.

For a constant speed of the substrate relative to a print head or print head assembly - said speed represented by a parameter fastScanVelocity - the printing resolution in the fast scan orientation - represented by a parameter fastScanResolution - is proportional with the firing frequency of the nozzles represented by a parameter firingFrequency. The parameter firingFrequency stands for the time rate at which ink droplets can be ejected by a nozzle. Hence the fast scan resolution fastScanResolution is dictated by the ratio of the firing frequency firingFrequency divided by the velocity fastScanVelocity in the fast scan direction:

### fastScanResolution=FiringFrequency/fastScanVelocity

A higher spatial resolution enables the rendering of finer image details and hence generally enables to achieve a higher image quality.

### computer system

According to a preferred embodiment and referring to Figure 6, printer commands are generated from a data processing system 600 such as a computer. The data processing system 600 comprises a network connection means 621, a central processing unit 622 and memory means 623, which are all connected through a computer bus 624. The data processing system 600 typically also has a computer human interface 630, 631 for inputting data and a computer human interface 640 for outputting data. According to one embodiment, the computer program code is stored on a computer readable medium such as a mass storage device 626 or a portable data carrier 650, which is read by means of a portable data carrier reading means 625.

### printer controller

Referring to Figure 7, a substrate transport motor 740, a curing station 750 and actuators of print heads 730 are controlled by a printer controller 700. Printer commands 710 are received by a buffer memory 701. These printer commands contain controller information, which is sent to controlling means 705 and image data that is sent to an image buffer 702. An image processor 703 can operate on the image data in the image buffer 702. The image processor 703 has access to one or more threshold masks 711 for the purpose of halftoning. The controlling means 705 controls a substrate transport driver 707 that drives said substrate transport motor 740. The controlling means 705 also controls a curing station driver 706 that drives a curing station 750. The information in the image buffer 702 can be used to drive the actuators of the print heads 730 by means of a print head driver 704.

### halftoning processor

### binary halftoning processor

According to one embodiment of the current invention, the image processor 703 in the printer controller 700 comprises a halftoning processor for converting a continuous tone image into a halftone image.

According to a preferred embodiment, said halftoning processor uses one or more threshold masks 711.

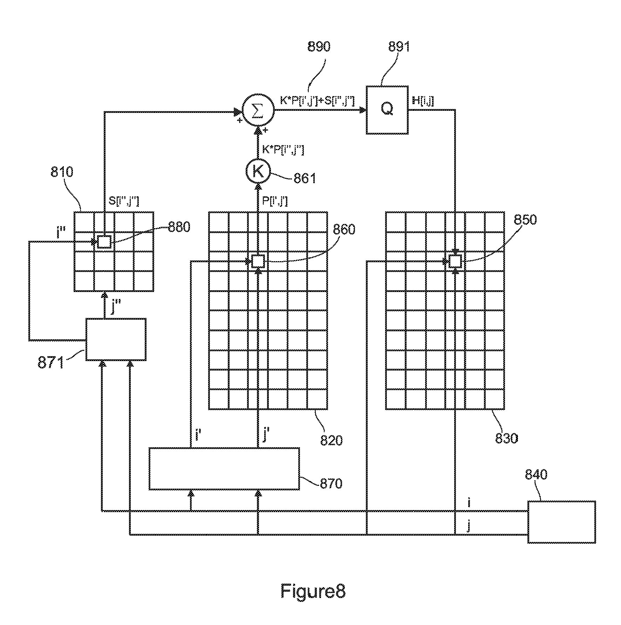

Figure 8 shows a first embodiment of a halftone processor. A continuous tone image 820 comprising pixels P[i,j] 860 represented with 8 unsigned bits per pixel is converted into a halftone image 830 comprising halftoned pixels H[i,j] 850 represented with 1 (unsigned) bit per pixel. This is achieved by using a threshold mask 810 comprising threshold values S[i,j] 880 that are preferably represented on a scale from 1 to 255.

An address generator 840 generates addresses [i,j] of the halftone image 830. These addresses [i,j] are converted by an address converter 870 into converted addresses [i',j']. The address conversion may comprise position, scaling and rotation coordinate transformations. The address [i',j'] is used to address a continuous tone pixel P[i',j'] 860 of an image 820.

The value of the continuous tone pixel is P[i'j'] is multiplied by an integer factor K in a multiplier 861 to obtain a multiplied value K*P[i'j']. In the current embodiment K is preferably equal to one.

The addresses [i,j] are also converted by a modulo converter 871 into modulo converted addresses [i'',j'']. These modulo converted addresses [i'',j''] address threshold values S[i'',j''] 880 in a threshold mask 810 comprising isize by jSize thresholds. According to one embodiment and using computer-like code:
i'' = i modulo iSize;
j'' = j modulo jSize;

The conversion of the continuous tone pixel P[i',j'] 860 into a halftone pixel H[i,j] 850 is obtained by adding to the multiplied continuous tone pixel K*P[i',j'] 860 a threshold value S[i'',j''] 880, and quantizing the result K*P[i',j']+S[i",j"] by a quantizer 891. According to the current embodiment, the quantization comprises obtaining the most significant bit of a nine bit word that represents said sum P[i',j']+S[i'',j'']. This most significant bit can be conveniently isolated by shifting the result of said sum P[i',j']+S[i'',j''] eight times to the right. Using computer-like code, the operation can be represented as:
H[i,j] = (P[i',j']+S[i'',j''])>>8;

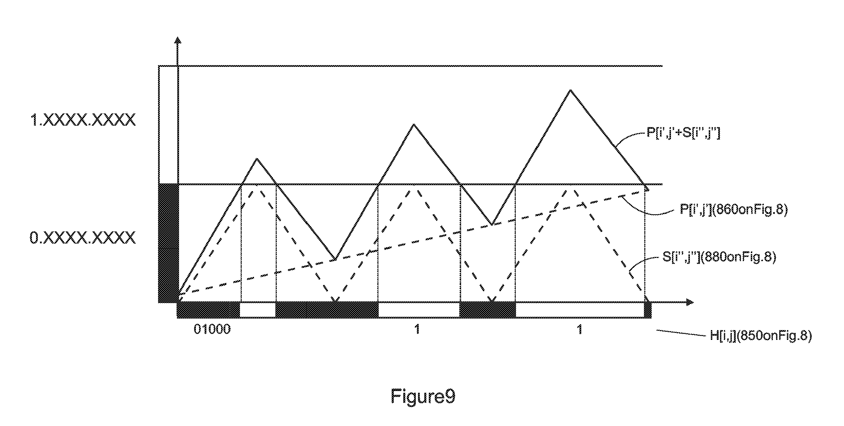

The operation of the halftoning image processor can now be explained by means of Figure 9, which shows a one dimensional cross section of an image having pixels P[i',j'] and of a threshold mask having threshold values S[i'',j'']. For reasons of clarity, the values of the image and threshold mask are drawn as continuous lines, although in reality the image and the threshold mask values are discrete samples in space having discrete values. Also for clarity, the values of the threshold mask that are shown are representative for periodical screening as opposed to for frequency modulation screening. It is clear however, to the person skilled in the art that said halftoning processor also works when a threshold mask is used that has been specifically calculated for the purpose of frequency modulation halftoning as in one of the other embodiments of the current invention.

What Figure 9 shows is that the values P[i'' ,j''] are converted by the halftone processor into a binary pattern of halftoned pixels H[i,j] of which the spatially averaged density corresponds with the pixel value P[i',j'].

The embodiment demonstrated in Figure 9 corresponds to a halftoning process for a printer that can render two density values that are binary coded as 0 and 1. Variations of the method exist that also work for s printer than can render more than two density levels.

### multilevel halftoning processor - first embodiment

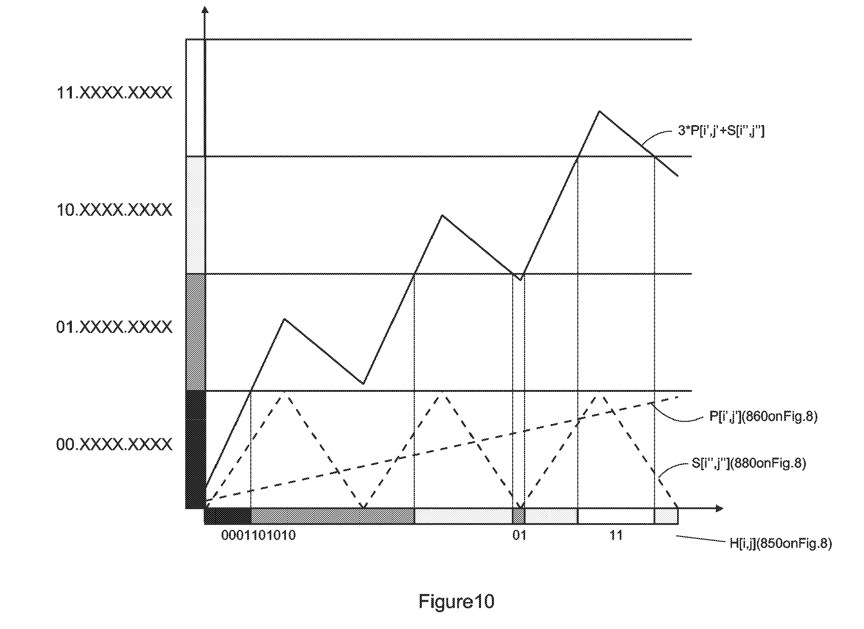

Figure 10 shows a first embodiment of a halftone processor for a printer that can render not two but four halftone values H[i,j] having values 0, 1, 2 or 3.

According to the current embodiment, K is preferably set to a value of three and the quantizer is preferably programmed to calculate the two most significant bits of a 10 bit word that represents the sum 3*P[i'j'] + S[i",j"].

In computer like code this is for example obtained by the following operation:
H[i,j] = ((0B11.0000.0000)&(K*P[i,j]+S(i,j]))>>8;

The operation of this embodiment is also explained by means of Figure 10, showing that a continuous tone value of a pixel P[i',j'] is converted into halftone pixels having a variable density of which the spatially averaged density corresponds with the pixel value P[i',j'].

The above example was given for a system capable of reproducing 4 density values. If the number of density values is for example M (M being an integer power of 2), then K is preferably set to M-1, and the quantizer is preferably programmed to calculate the log(M)/log(2) most significant bits of the sum
K*P[i',j']+S[i'',j''].

A special case of the above embodiment is when K = 1. In that case the multilevel screening reduces to a binary screening method according to a previous embodiment.

### multilevel halftoning processor - second embodiment

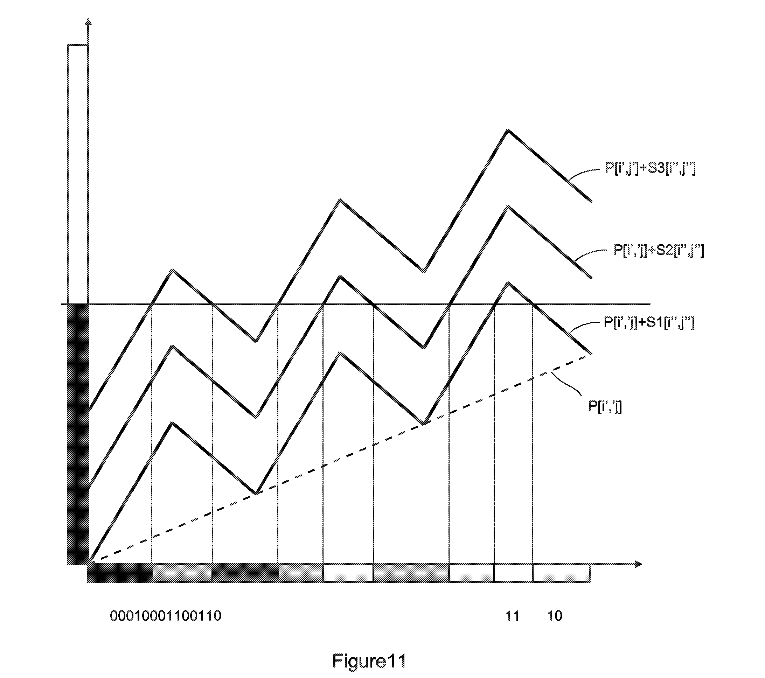

Another embodiment of a multilevel halftoning processor is shown in Figure 11.

According to this embodiment, not one but multiple threshold masks are used. Specifically referring to Figure 11, a set of three threshold masks are used corresponding to threshold values S1[i",j"], S2[i",j"] and S3[i",j"].

The value H[i,j] that is generated for a halftone pixel depends on the value of a pixel P[i,j] relative to the values in the three threshold values S1[i'',j''], S2[i'',j''] and S3[i'',j''] in the threshold masks.

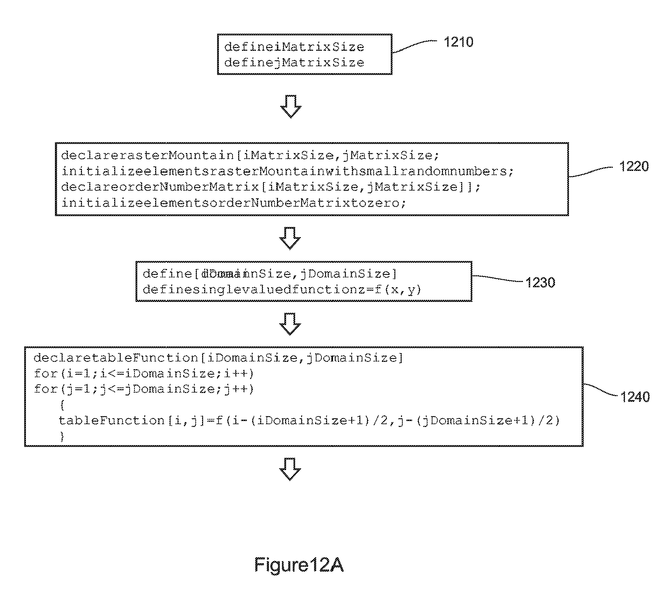

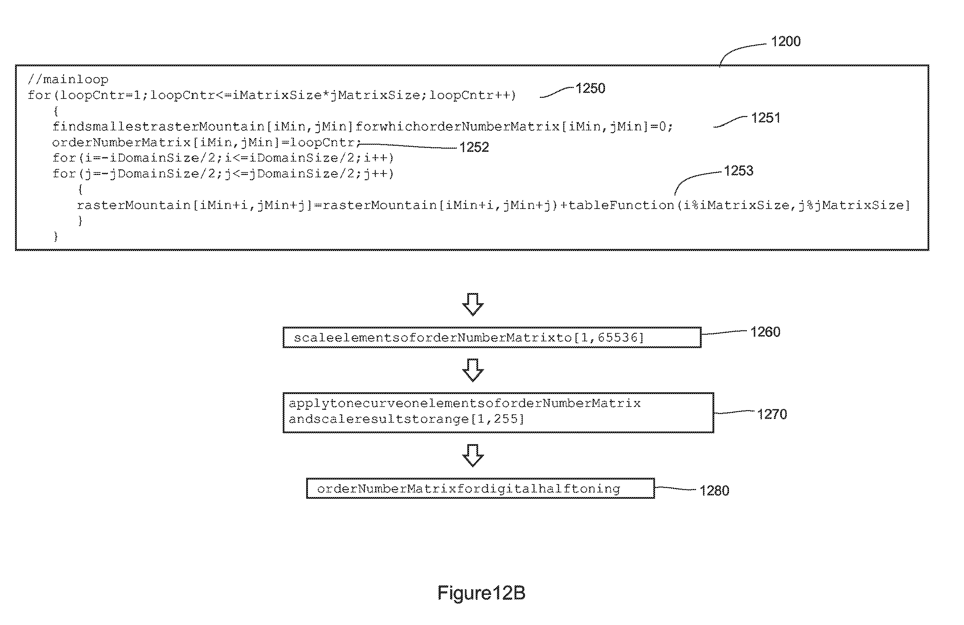

Referring to the embodiment in Figure 12 and using computer-like language like computer code, the calculation of H[i,j] could proceed as follows.

First an intermediate set of binary halftone values H1[i,j], H2[i,j] and H3[i,j] are calculated using the following set of formulas:
H3[i,j] = ((0B1.0000.0000)&(P[i,j]+S3[i,j]))>>8;
H2[i,j] = ((0B1.0000.0000)&(P[i,j]+S2[i,j]))>>8;
H1[i,j] = ((0B1.0000.0000)&(P[i,j]+S1[i,j]))>>8;

These formula's are similar to the formula's used in a previous embodiment and aim at calculating the most significant bit H1[i,j], H2[i,j] and H3[i,j] of a sum of the pixel value P[i',j'] and any of the threshold values S1[i'',j''], S2[i'',j''] and S3[i'',j''].

Then, using a look up table, a value H[i,j] is calculated based on the possible outcomes of H1 [i, j], H2 [i, j] and H3 [i, j] :

| H1[i,j] | H2[i,j] | H3[i,j] | H[i,j] |
|---|---|---|---|
| 0 | 0 | 0 | 00 |
| 1 | 0 | 0 | 01 |
| 1 | 1 | 0 | 10 |
| 1 | 1 | 1 | 11 |

The embodiment shown in Figure 11 can be extended in a straightforward way to cases for printers having more or less possible printable density values per pixel.

For example, in the case that a halftone is to be calculated for a printer that can render 6 densities per pixel, a set of 5 threshold masks would be used and the following table could serve to convert a set of 5 intermediate binary halftone values into a multilevel halftone value.

| H1[i,j] | H2[i,j] | H3[i,j] | H4[i,j] | H5[i,j] | H[i,j] |
|---|---|---|---|---|---|
| 0 | 0 | 0 | 0 | 0 | 000 |
| 1 | 0 | 0 | 0 | 0 | 001 |
| 1 | 1 | 0 | 0 | 0 | 010 |
| 1 | 1 | 1 | 0 | 0 | 011 |
| 1 | 1 | 1 | 1 | 0 | 100 |
| 1 | 1 | 1 | 1 | 1 | 101 |

### halftone processor - implementation

According to one embodiment, a halftoning processor is implemented using software code that runs on a general purpose data processing system such a system shown in Figure 6.

According to another embodiment, a halftone processor is implemented in an embedded system, for example using ASIC or FPGA.

### description of embodiments to calculate threshold masks

### calculation of a single threshold mask

A preferred embodiment of a method to obtain a threshold mask that achieves the objects of the current invention is explained in the following paragraphs and is supported by the pseudo-programming language in the flow diagram in Figure 12A and 12B.

### size of the threshold matrix (step 1210 in Figure 12A)

A first step 1210 consists of defining an integer size of the threshold mask that is to be calculated. The threshold mask can be square or rectangular. In the case that the frequency modulation technique is used for a printer that that has the same resolution in the i-orientation iRes and the j-orientation jRes, the threshold mask is preferably square and has a size of iMatrixSize in the i-orientation and jMatrixSize in the j-orientation. According to a first preferred embodiment, the mask size is a power of 2. Good results can be obtained with a threshold matrix having a size of 256 by 256 thresholds. According to a second embodiment, the mask size is a prime number, for example 491. Larger matrices produce only slightly better results but require more memory and more computations. If the print resolutions iRes and jRes are different, the mask is preferably rectangular and the sizes are preferably selected such that iMatrixSize*iRes = jMatrixSize*jRes.

### declaring two matrices (step 1220 in Figure 12A)

According to a preferred embodiment, two matrices called rasterMountain and orderNumberMatrix are declared in a step 1220, both having a size of iMatrixSize by jMatrixSize.

The matrix rasterMountain contains preferably floating point values. It is preferably initialized with small random numbers, such as numbers produced by a white noise random generator. The numbers can for example be in a range between 0.0 and 10.0E-2. The matrix orderNumberMatrix contains preferably integer values that are preferably initialized to zero, although other initial values are also possible.

### defining a single valued function having a two-dimensional domain (step 1230 in Figure 12A

According to a preferred embodiment, a next step 1230 comprises defining a single valued function z = f(x,y), which has its domain in the i-orientation and j-orientation. The domain of the function is preferably limited and is preferably rectangular or elliptical.

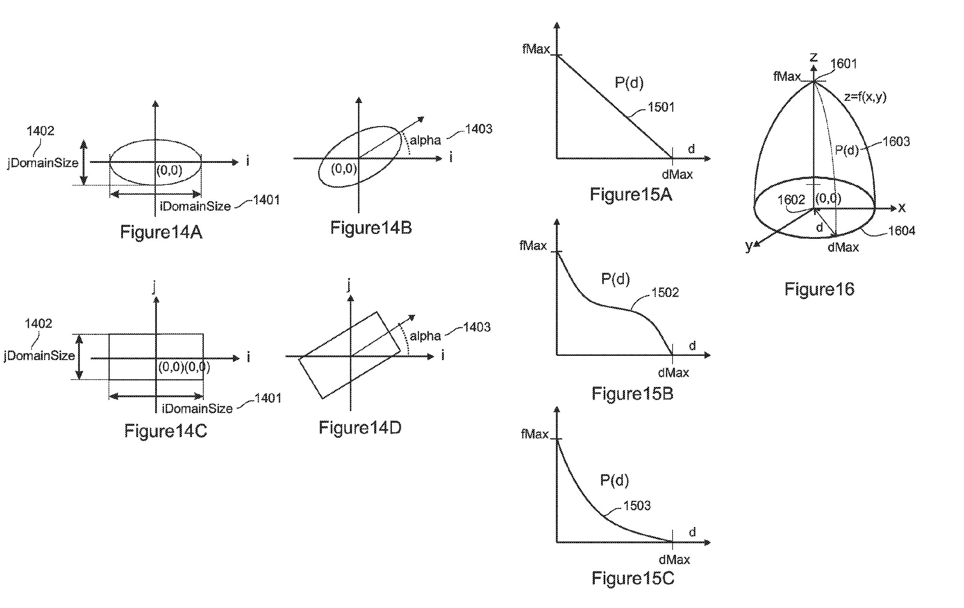

Different embodiments of a domain are shown in Figure 14A, 14B, 14C and 14D.

In the case of an elliptical domain (Figure 14A and Figure 14B), the size of the domain is defined by iDomainSize 1401 along a first axis parallel to the i-orientation and jDomainSize 1402 along a second axis parallel to a j-orientation. In one embodiment, the ellipse is rotated over an angle alpha 1403 with regard to the i-orientation and j-orientation. According to the preferred embodiment, this angle alpha is equal to zero degrees and the long and short axes of the ellipse are parallel with the i-orientation and j-orientation.

Preferably, iDomainSize is odd and larger than iMatrixSize and preferably, jDomainSize is also odd and larger than jMatrixSize, for example, double the corresponding matrix size.

In the case of a rectangular domain (Figure 14C and Figure 14D), the size of the domain is defined by iDomainSize 1401 along a first axis parallel to a i-orientation of the rectangle and jDomainSize 1402 along a second axis parallel to a j-orientation of the rectangle. In one embodiment, the rectangle is rotated over an angle alpha 1403 with regard to the i-orientation and j-orientation. According to the preferred embodiment, this angle alpha is equal to zero degrees and the sides of the rectangle are parallel with the i-orientation and j-orientation.

Preferably, iDomainSize is odd and larger than iMatrixSize and preferably, jDomainSize is odd and larger than jMatrixSize, for example, double the corresponding matrix size plus one.

According to a preferred embodiment and referring to Figure 16, the single valued function z=f(x,y) has a single maximum fMax 1601 preferably at or near the origin (0,0) 1602 of its domain. Preferably its value gradually decreases away from the center towards the boundaries of the domain, preferably to zero. Near the origin is defined as closer to the origin than 25% of the length of the shortest axis of the domain.

Preferably, the single valued function is symmetrical with regard to the two main axes of the domain. Figure 16 shows an example of such a function. The single valued function is preferably described by means of a profile P(d) 1603 that describes how the function values preferably monotonically decrease from their maximum fMax 1601 at the center of the domain, corresponding to d=0.0, towards preferably zero at the boundaries 1604 of the domain where d=dMax. Examples of profiles that can be used to define a single valued function are:
- linear profile: P(d) = A*(1-x) + B; (see Figure 15a)
- parabolic profile: P(d) = A*(1-x)*(1-x)+B*(1-x)+C;
- exponential profile: P(d) = A*exp(B*x); (see Figure 15c)
- profile defined by cubic interpolation between points (see Figure 15b)
- profile defined by Bezier segments defined by anchor points
in which:
- x = d/Max
- d is an element from the interval [0.0,Max]
- A,B,C are constants

According to a preferred embodiment of the invention an exponential profile is used with A=1.0 and B=-1/4 in the above equation for an exponential profile.

Other examples of profiles are shown in Figure 15A, 15B and 15C. The invention is not limited to these profiles and many other profiles exist that produce satisfactory results.

### table representation of the function z = f(x,y)

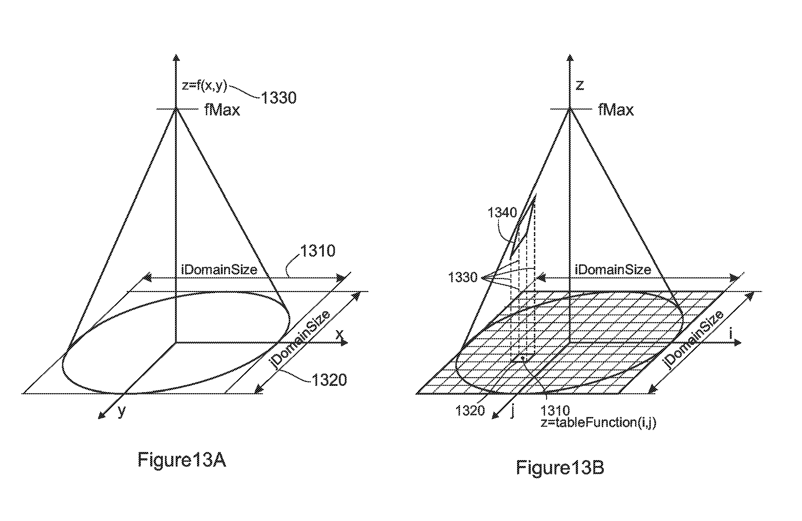

The above definition represents an explicit representation of the single valued function z=f(i,j), for example as drawn in Figure 13A. According to a preferred embodiment of the invention, also a table version of the function z=x (i,j) is calculated. According to a preferred embodiment, a rectangular matrix tableFunction with iDomainSize by jDomainSize floating point elements is declared and initialized in a step 1240 (Figure 12).

According to a preferred embodiment, the center element [(iDomainSize+1)/2, (jDomainSize+1)/2)] of the matrix corresponds with the origin (0,0) of the single valued function z=f(x,y). The value of each element in said matrix tableFunction is preferably set to a number that is representative of the volume integral of the function z=f(x,y) over the area of the corresponding matrix element. This is exemplified by means of Figure 13B. The value of an element 1310 is set to a value that is representative for the volume defined by the rectangular area 1320, the four ribs 1330 and the upper surface 1340. According to a preferred embodiment of the invention, the value of the integral is approximated using one of the techniques as known in the art under the name of numerical integration or quadrature.

### description of the main loop of the computer implemented method

According to a preferred embodiment, a next step 1250 (Figure 12B) comprises defining and declaring a loop counter loopCntr, which is preferably initialized at a value 1. This loop counter can be used to assign order numbers to elements of the matrix orderNumberMatrix. The lowest order number is preferably 1, the highest order number preferably iMatrixSize*jMatrixSize. According to a preferred embodiment, one interpretation of an order number at a given position in the matrix orderNumberMatrix is that it indicates at which point in the sequence of adding halftone dots for increasing the density of a tint from zero to maximum a halftone dot is added at the corresponding position of the order number.

According to a preferred embodiment, a first step 1251 of the main loop comprises determining a set of coordinates [iMin,jMin] of the element in the matrix rasterMountain that has a global minimum value minRasterMountain and additionally of which the corresponding element in orderNumberMatrix has not received an order number. Determining such a global minimum is preferably done using one of the numerical sorting techniques as they are known in the art of numerical computing.

According to a preferred embodiment, a second step 1252 of the main loop comprises assigning to the element with position (iMin,jMin) in the matrix orderNumberMatrix the value of loop counter loopCntr.

According to a preferred embodiment, a third step 1253 of the main loop comprises shifting all the elements of the matrix tableFunction along the i and j coordinates by a an offset so that the center of the matrix tableFunction corresponds with the position (iMin,jMin) of the global minimum in rasterMountain. As part of the same step 1253, these elements are added one to one to the elements of the matrix rasterMountain.

In the case that, after the shifting operation by an offset, the position of an element of the matrix tableFunction falls outside of the position range of the matrix rasterMountain, then said element is mapped on an element of rasterMountain that corresponds with the element in the repetitive extension of rasterMountain. With a repetitive extension of a matrix is meant that the elements of the matrix are repetitively replicated in the i-orientation over a distance that corresponds with iDomainSize in the j-orientation over a distance that corresponds with jDomainSize. Practically, this repetitive extension of tableFunction is realized by applying a modulo operation on the [i,j] coordinates of the function using iDomainSize as modulo for the [i] coordinate and jDomainSize for the [j] coordinate.

Adding the elements of the matrix tableFunction to the matrix rasterMountain results in an updated version of the matrix rasterMountain.

According to a preferred embodiment, a third step 1254 of the main loop comprises incrementing the loop counter loopCntr of the main loop by one.

At the end of the main loop, the value of the loop counter loopCntr is checked. If the loop counter loopCntr is equal to preferably iMatrixSize*jMatrixSize, the main loop is exited, otherwise the steps one to four of the main loop are repeated.

The method according to above description results in a matrix orderNumberMatrix with values ranging from 1 to iMatrixSize*jMatrixSize.

According to a preferred embodiment of the current invention, a step 1260 comprises rescaling the values of the elements in the matrix orderNumberMatrix into a tonal range from 1 to preferably 1 to 65,536.

According to a preferred embodiment, a step 1270 comprises mapping the values of the elements in the matrix orderNumberMatrix that are represented with first, higher number of bits to values represented with a second lower number of bits using a tone curve. According to a preferred embodiment, said first higher number of bits is 16 and said second lower number of bits is 8.

Methods for applying a tone on a threshold mask are known in the art and are, for example, explained in US 5,818,604. The result of step 1270 is a threshold mask that can be used for frequency modulation halftoning, for example by using the scheme that is shown in Figure 8.

The method that has just been presented is computationally effective: no transformation between the frequency and space domain are required, no filtering and no plural iterations are required as in the prior art methods. The method produces halftone distributions having blue noise characteristics, because the addition of the single valued function to an element of the rasterMountain has the effect that the position of a halftone dot that is added to increase the average density of a halftone dot distribution is not nearby the position of any of the dots to render a lower average density.

According to one embodiment the method also comprises a step to create from the halftoned image (830) a printing plate precursor. A printing plate precursor is an imaging material that can be used as a printing plate after one or more treatment steps that include image-wise exposure and possibly processing.

According to another embodiment the method also comprises a step to print the halftoned image (830) on a substrate using an inkjet printing apparatus.

The above description represents a method to calculate a threshold matrix for the purpose of frequency modulation halftoning that requires fewer calculations than the methods in the prior art that are based on using void and cluster filtering and transformations to the Fourier domain. Instead, the method according to the invention requires for the calculation of the position of each halftone dot only the addition of the elements of a first matrix to the elements of a second matrix, and the result of a sorting algorithm for which efficient implementations exist.

The above method also results in dot profiles that have desirable blue noise characteristics because the effect of the addition of the matrix tableFunction to the matrix rasterMountain is designed so that the position of a next minimum value in the matrix rasterMountain is moved away from the position of the previous minimum in the matrix rasterMountain. This implies also that in the ordering sequence of placing halftone dots for increasingly darker tints, the position of a next halftone dot is preferably placed at a distance from the position of a previous halftone dot. Because during the subsequent passes through the main loop the effects of adding the matrix tableFunction to the matrix rasterMountain are accumulated, the position of next halftone dot is preferably placed at a distance from the position of the previous but also at a distance from the positions of all previously placed halftone dots. The use of the single valued function z=f(x,y) according to the invented method hence has an inhibiting effect on the placement of a halftone dot in the immediate area of a previously placed halftone dot and hence counteracts the occurrence of clusters and voids of halftone dots which are responsible for power at low frequencies in the Fourier domain. From this follows that the method according to the current invention is capable of producing dot distributions of which the power spectrum has a blue noise characteristic.

### abstraction of said method to calculate of a single threshold mask

While the present invention will hereinafter be described in connection with preferred embodiments thereof, it will be understood that it is not intended to limit the invention to those embodiments.

For example, equivalent results are obtained when the two dimensional domain of the single valued function is not limited or if it has a shape that is different from the rectangular or elliptical shape in the preferred embodiments. Alternative methods exist over the use of a function profile P(d) for defining the single valued function z=f(x,y) and that produce equivalent results. The use of a function z=f(x,y) that does not decrease its value monotonically away from the origin where it has a maximum can result in equivalent results. Equivalent results are also obtained when a single valued function is used that does not have a global maximum but a minimum at or near its origin. In that case the step 1251 in Figure 12 is preferably replaced by finding a maximum, rather than a minimum in the matrix rasterMountain.

### calculation of multiple threshold masks for color printing

In the case of printing with multiple colorants, not one but a set of threshold masks are used. For example, the printing of color images is usually performed by halftoning and printing of a sub-images with cyan, magenta, yellow and black ink. According to one embodiment of the current invention, a set of plural and distinct threshold masks are calculated using one of the previously described methods to calculate a single threshold mask.

According to a preferred embodiment, the multiple threshold masks are calculated in a way that the correlation between the dot distributions produced by said threshold masks is constraint.

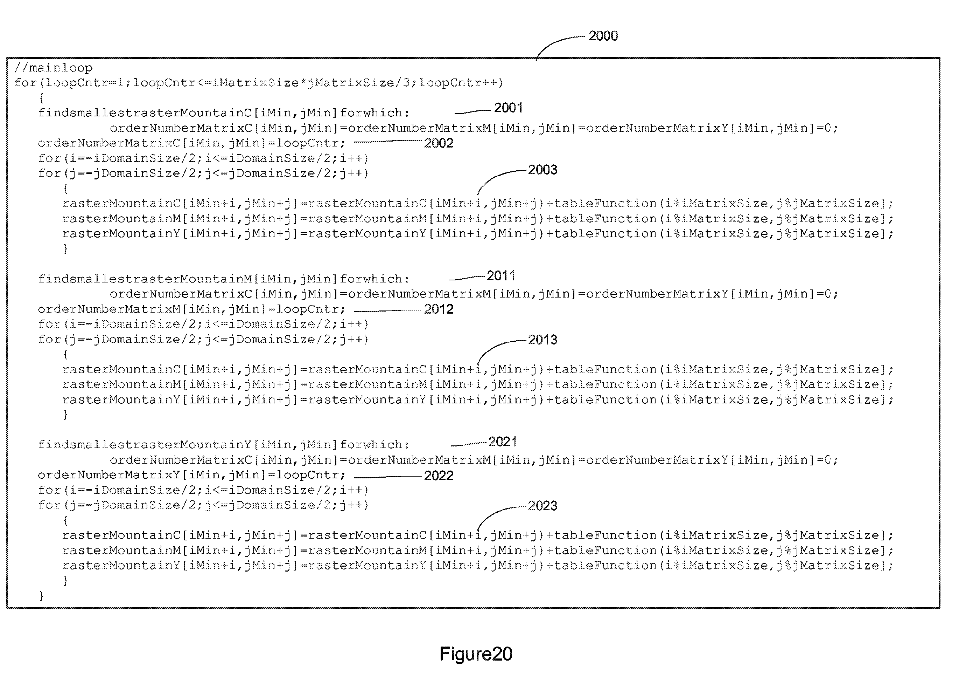

An embodiment of the current invention is explained by means of Figure 20, which shows a main loop 2000 that is a further development of the main loop 1200 in Figure 12.

In the main loop 2000, not one variable rasterMountain but three variables are used called rasterMountainC, rasterMountainM, and rasterMountainY. These three variables correspond to cyan, magenta and yellow colors of three sub-images.

Also in the main loop 2000, not one variable orderNumberMatrix but three variables are used called orderNumberMatrixC, orderNumberMatrixM, and orderNumberMatrixY. These three variables correspond to cyan, magenta and yellow colors of three sub-images.

These 6 matrices have the same size iMatrixSize by jMatrixSize and have been declared and initialized in a previous step similarly as in a step 1220 in Figure 12A.

According to an embodiment of the current invention and referring to Figure 20, the elements of the matrices orderNumberMatrixC, orderNumberMatrixM, and orderNumberMatrixY are calculated in the same main loop 2000.

A first step 2001 in said main loop comprises determining a set of coordinates [iMin,jMin] of the element in the matrix rasterMountainC that has a global minimum value minRasterMountain and additionally of which the corresponding element in orderNumberMatrixC, orderNumberMatrixM and orderNumberMatrixY has not received an order number.

A second step 2002 in said main loop comprises assigning to the element with position [iMin,jMin] in the matrix orderNumberMatrixC the value of loop counter loopCntr.

A third step 2003 of the main loop comprises shifting all the elements of the matrix tableFunction along the i and j coordinates by a an offset so that the center of the matrix tableFunction corresponds with the position [iMin,jMin] of the global minimum in rasterMountainC. As part of the same step 2003, these elements are added one to one to the elements of the matrix rasterMountainC, rasterMountainM, and rasterMountainY.

The effect of adding the values of the elements of the matrix tableFunction to rasterMountainC, to rasterMountainC, and to rasterMountainC is that, the position of a next minimum in any of the matrices rasterMountainC, rasterMountainM, and rasterMountainY is moved away from the position [iMin,jMin] that was found in rasterMountainC. This implies that the placement of a halftone dot at position [iMin,jMin] in the cyan sub-image has an inhibiting effect on the placement other halftone dots in the immediate area in any of the cyan, magenta and yellow sub-images.

The next steps 2011, 2012 and 2013 are similar to the steps 2001, 2002 and 2003, and the same is true for the steps 2021, 2022 and 2023.

The main loop 2000 is executed iMatrixSize*jMatrixSize/3 times. At that point iMatrixSize*jMatrixSize/3 times orderNumberMatrix elements in the matrices rasterMountainC, rasterMountainM, rasterMountainY have received an order number. The positions of these elements in the three matrices are complementary, in that all the elements have different positions, and no position of such an element is common to a position of another element in another of said two matrices.

The principles of the current invention as explained by means of the example shown in Figure 20 can be generalized.

For example it is possible to calculate assign order numbers ranging from 1 to iMatrixSize*jMatrixSize/4 to elements belonging to a set of four order number matrices orderNumberMatrixC, orderNumberMatrixM, orderNumberMatrixY, and orderNumberMatrixK.

Likewise it is possible to calculate assign order numbers ranging from 1 to iMatrixSize*jMatrixSize/2 to elements belonging to a set of two order number matrices such as for example orderNumberMatrixC and orderNumberMatrixM.

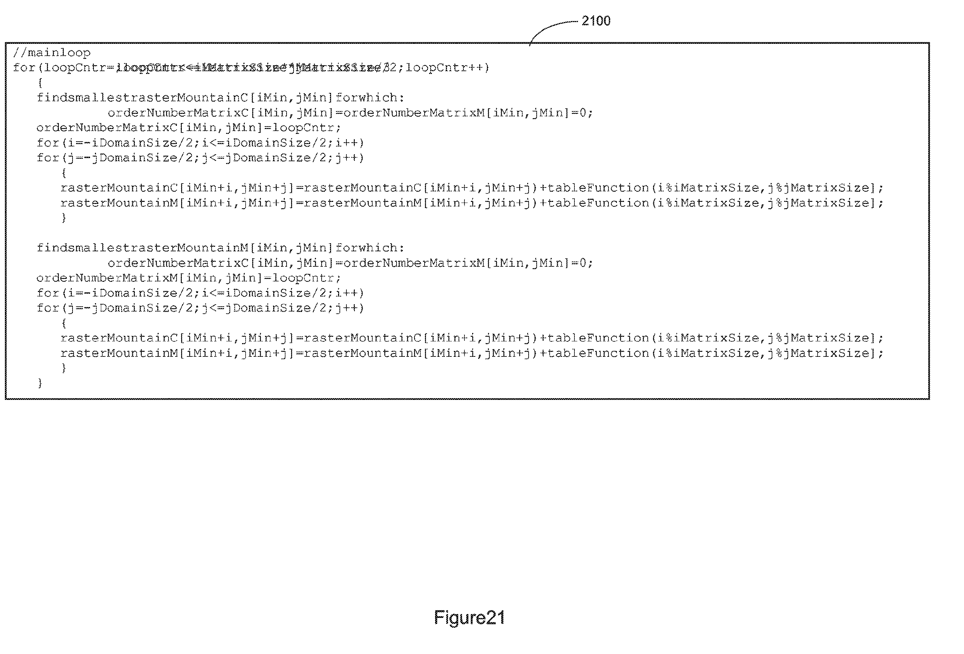

Referring to Figure 21, it is also possible to calculate assign order numbers ranging from 1+iMatrixSize*jMatrixSize/3 to iMatrixSize*jMatrixSize/2 to elements belonging to a set of two order number matrices such as for example orderNumberMatrixC and orderNumberMatrixM. In that case it is assumed that in each of these two order number matrices elements have already received order numbers ranging from 1 to iMatrixSize*jMatrixSize/3 and that the matrices rasterMountainC and rasterMountainM have accordingly been updated. Any set of two matrices that is calculated in a loop 2000 in Figure 20 can serve as a starting point for a loop 2100 in Figure 21.

Many other variations are also possible. A general condition is that at the end of a main loop 2000, 2100 the total number of elements that have received an order number is preferably equal to iMatrixSize*jMatrixSize.

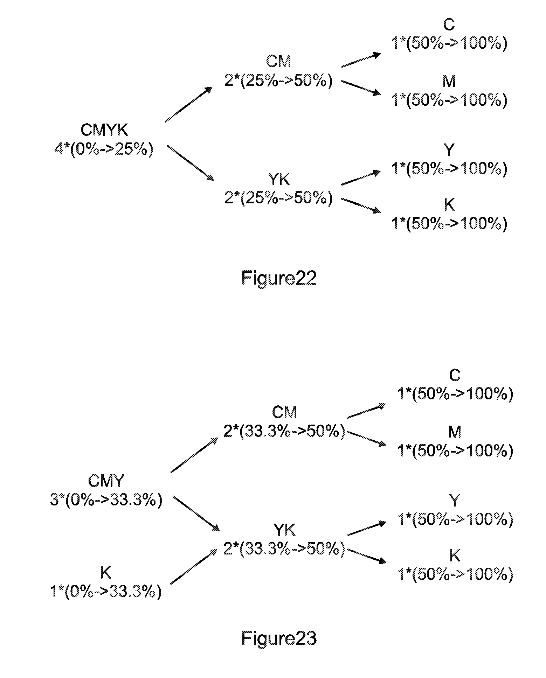

Figure 22 shows a first preferred embodiment according to the current invention. We use the notation C, M, Y and K to refer to the respective order number matrices.

In a first step, the elements of a set of four order number matrices C, M, Y, K receive order numbers from 1 to iMatrixSize*jMatrixSize/4 in one combined loop.

In a second step, the elements of a first set of two order number matrices C, M receive order numbers from 1+iMatrixSize*jMatrixSize/4 to iMatrixSize*jMatrixSize/2 in a combined loop. Also in said second step, the elements of a second set of two order number matrices Y, K receive order numbers from 1+iMatrixSize*jMatrixSize/4 to iMatrixSize*jMatrixSize/2 in a third combined loop.

In a third step the elements of each one of the order number matrices C, M, Y and K receive order numbers from 1+iMatrixSize*jMatrixSize/2 to iMatrixSize*jMatrixSize in a separate loops.

Figure 23 shows another preferred embodiment.

In a first step, the elements of a set of three order number matrices C, M, Y receive order numbers from 1 to iMatrixSize*jMatrixSize/3 in one combined loop. In parallel, a fourth matrix K receives order numbers from 1 to iMatrixSize*jMatrixSize/3 in a separate loop.

In a second step, the elements of a first set of two order number matrices C, M receive order numbers from 1+iMatrixSize*jMatrixSize/3 to iMatrixSize*jMatrixSize/2 in a combined loop. Also in said second step, the elements of a second set of two order number matrices Y, K receive order numbers from 1+iMatrixSize*jMatrixSize/3 to iMatrixSize*jMatrixSize/2 in a third combined loop.

In a third step the elements of each one of the order number matrices C, M, Y and K receive order numbers from 1+iMatrixSize*jMatrixSize/2 to iMatrixSize*jMatrixSize in a separate loops.

### calculation of a set of threshold masks for multilevel printing

According to a preferred embodiment of the current invention a set of children threshold masks is derived from a single threshold mask or order number matrix that serves as a parent matrix.

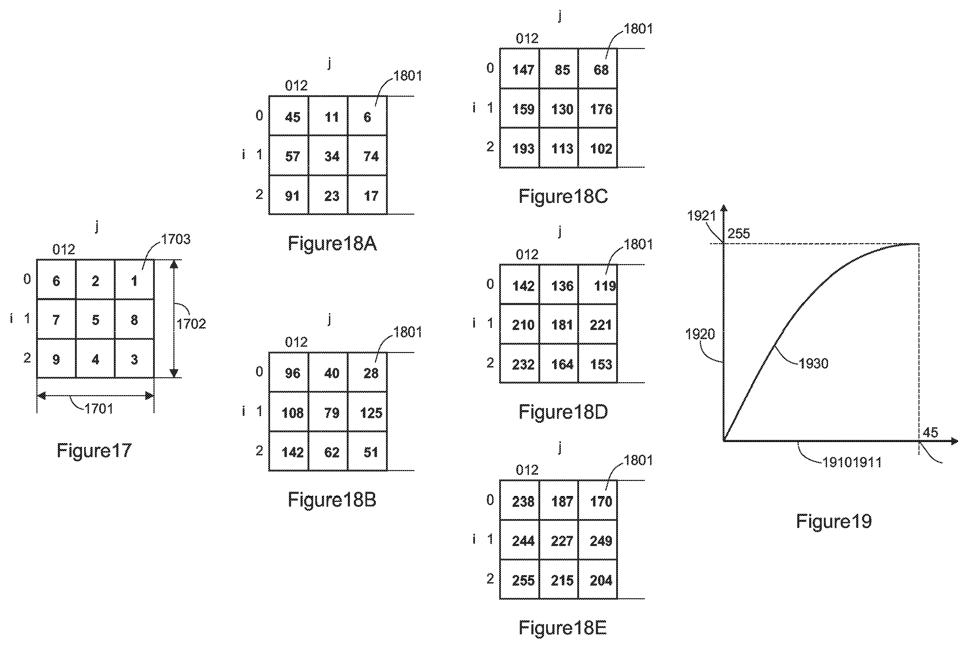

Figure 17 shows an example of a small threshold mask that serves as parent matrix. In this case, the size of the matrix along the i-orientation iMatrixSize 1702 and the size of the matrix along the i-orientation iMatrixSize 1702 are both equal to three so the parent matrix comprises 9 threshold values. These threshold values can be ordered from smallest to largest and be given an order number. Said order number can be assigned to every position in the threshold matrix. In Figure 17, the values 1, 2, 3,... 9 in the indicate the order number of a threshold in the series of threshold values in the parent matrix. The relation between the order number and the position of the corresponding threshold is also conveniently represented in Table 1 below.

**Table 1**

| order number | position |
|---|---|
| 1 (smallest threshold) | [0,2] |
| 2 | [0,1] |
| 3 | [2,2] |
| 4 | [2,1] |
| 5 | [1,1] |
| 6 | [0,0] |
| 7 | [1,0] |
| 8 | [1,2] |
| 9 (largest threshold) | [2,0] |

Alternatively and according to a preferred embodiment of the current invention, the order numbers of a series of threshold values are directly obtained from the matrix orderNumberMatrix that is calculated in a main loop 1200 in Figure 12B.

By way of example and only for explaining the current invention, it is assumed that a printing device is capable of reproducing 5 density levels (or equivalent dot areas or droplet volumes). In the current example, said levels can be coded as level 0, level 1, level 2, level 3 and level 4. The method, however, works just as well with any other number of levels. In the general case, a number of printable levels is equal to a parameter nbrLevels ranging from level 0 to level nbrLevels-1.

According to one embodiment, a two-dimensional table can be made, called order number table that comprises a level index x and a position index y.

A level index x of said table corresponds to a printable level of a printer. The order of the levels is arranged so that a larger level index preferably corresponds to printing with a higher density.

A position index y of said table corresponds to a position in the parent matrix. The order of the positions is arranged so that a larger position index preferably corresponds with a larger threshold value at the corresponding position in the threshold mask.

Table 2 below shows an example that corresponds with the threshold mask shown in Figure 17 and in which the level index corresponds with a row index and a position index corresponds with a column index.

**Table 2**

| | [0, 2] | [0, 1] | [2, 2] | [2, 1] | [1, 1] | [0, 0] | [1, 0] | [1, 2] | [2, 0] |
|---|---|---|---|---|---|---|---|---|---|
| level 0 | | | | | | | | | |
| level 1 | | | | | | | | | |
| level 2 | | | | | | | | | |
| level 3 | | | | | | | | | |
| level 4 | | | | | | | | | |

According to one embodiment of the current invention, a single valued function z=f(x,y) is used in which a first parameter (x) of its domain corresponds with a level index in said order number table and in which a second parameter (y) of its domain corresponds with a position index in said order number table.

According to a preferred embodiment, a function is used z=A*x+B*y in which A and B are constants. For example, A could be one and B could be 0.3: z = x+0.3*y.

According to a preferred embodiment of the current invention, the method comprises a step in which said function is used to populate said order number table. Referring to the example shown in Figure 17, and using the function z = x+0.3*y, this results in the Table 3 below:

**Table 3**

| | [0,2] | [0,1] | [2,2] | [2,1] | [1,1] | [0,0] | [1,0] | [1,2] | [2,0] |
|---|---|---|---|---|---|---|---|---|---|
| level 0 | 0.3 | 0.6 | 0.9 | 1.2 | 1.5 | 1.8 | 2.1 | 2.4 | 2.7 |
| level 1 | 1.3 | 1.6 | 1.9 | 2.2 | 2.5 | 2.8 | 3.1 | 3.4 | 3.7 |
| level 2 | 2.3 | 2.6 | 2.9 | 3.2 | 3.5 | 3.8 | 4.1 | 4.4 | 4.7 |
| level 3 | 3.3 | 3.6 | 3.9 | 4.2 | 4.5 | 4.8 | 5.1 | 5.4 | 5.7 |
| level 4 | 4.3 | 4.6 | 4.9 | 5.2 | 5.5 | 5.8 | 6.1 | 6.4 | 6.7 |

According to a preferred embodiment of the current invention, the method comprises a step in which each function value F(x,y) in Table 3 is assigned a unique order index o that corresponds with the order number of said function value F(x,y) in said series of function values.

For example, the position in Table 3 corresponding with level 0 and position [0,2] receives the smallest function value and is assigned an order index 1. Also for example, the position in Table 2 corresponding with level 0 and position [0,1] receives the second smallest function value and is assigned the order index 2. This process of assigning order numbers is repeated until all the positions in the order number table have received an order index.

The result of the above step is an order number table filled with order indices as shown in Table 4 below.

**Table 4**

| | [0,2] | [0,1] | [2,2] | [2,1] | [1,1] | [0,0] | [1,0] | [1,2] | [2,0] |
|---|---|---|---|---|---|---|---|---|---|
| level 0 | 1 | 2 | 3 | 4 | 6 | 8 | 10 | 13 | 16 |
| level 1 | 5 | 7 | 9 | 11 | 14 | 17 | 19 | 22 | 25 |
| level 2 | 12 | 15 | 18 | 20 | 23 | 26 | 28 | 31 | 34 |
| level 3 | 21 | 24 | 27 | 29 | 32 | 35 | 37 | 39 | 41 |
| level 4 | 30 | 33 | 36 | 38 | 40 | 42 | 43 | 44 | 45 |

According to a preferred embodiment of the current invention, the method comprises a step to transform the elements of the order number table obtained in a previous step into a threshold masks that can be used for multilevel halftoning using a scheme as , for example, the one explained by means of Figure 11 in the current application.

This transformation comprises two sub-steps. According to a first sub-step, the order numbers in said order number matrix are transformed into an appropriate range of threshold values. For example, the range of order numbers in Table 4 goes from 1 to 45. For the purpose of digital halftoning a continuous tone image represented with 8 bits, a range of threshold values is needed preferably having a range from 1 to 255. The transformation of the range can be achieved in different ways. In one embodiment, the elements of the order number matrix are simply multiplied by an appropriate scale factor. In the example of the order number table shown in Table 4, an appropriate scale factor would be 255/45. The multiplication of all the elements in Table 4 by said multiplication factor yields a new order number table that is shown in Table 5.

**Table 5**

| | [0,2] | [0,1] | [2,2] | [2,1] | [1,1] | [0,0] | [1,0] | [1,2] | [2,0] |
|---|---|---|---|---|---|---|---|---|---|
| level 0 | 6 | 11 | 17 | 23 | 34 | 45 | 57 | 74 | 91 |
| level 1 | 28 | 40 | 51 | 62 | 79 | 96 | 108 | 125 | 142 |
| level 2 | 68 | 85 | 102 | 113 | 130 | 147 | 159 | 176 | 193 |
| level 3 | 119 | 136 | 153 | 164 | 181 | 142 | 210 | 221 | 232 |
| level 4 | 170 | 187 | 204 | 215 | 227 | 238 | 244 | 249 | 255 |

In another embodiment, a look up table approach is used to map the range of values in the order number table to the appropriate range of values for the purpose of digital halftoning. Figure 19, for example, maps the range of the values of the elements of an order number table - represented on an axis 1910 and having a maximum 1911 - to a range of threshold values represented on a vertical axis 1920 and having a maximum 1921 using a mapping curve 1930. In one embodiment, the mapping curve 1930 in Figure 19 is not a linear mapping curve, but is designed to achieve a designed gradation of the halftoned image in the final printed result. A method to design such a curve is for example explained in US 5,818,604.

The result of this step is a transformed order number table.

According to a preferred embodiment of the current invention, the method comprises a step to separate said transformed order number table into a set of nbrLevels threshold masks. This is achieved by assigning every element of the transformed order number table to an element having a position [i,j] in a threshold mask, wherein the position [i,j] corresponds to the position index of said element in said transformed order number table, and wherein said threshold mask corresponds to the level index of said element in said transformed order number table.

Figure 18A to Figure 18E shows a set of threshold masks that are obtained by separating Table 5.

The result of this step is a set of nbrLevels threshold masks that can be used for multilevel halftoning using a method that was explained by means of Figure 11.

### abstraction of a method to calculate of a set of threshold masks for multilevel printing

While the present invention will hereinafter be described in connection with preferred embodiments thereof, it will be understood that it is not intended to limit the invention to those embodiments.

For example, different functions z=f(i,j) may be used. In the above example z=A*i+B*j was used with A=1 and B=0.3 but different values may be used.

If B is larger compared to A, a frequency modulation halftoning results that - for higher densities in an image - gives preference to increasing the density of already placed halftone dots before additional halftones are printed. Table 6 below gives an order number table that corresponds with a case that B is much larger than A.

**Table 6**

| | [0,2] | [0,1] | [2,2] | [2,1] | [1,1] | [0,0] | [1,0] | [1,2] | [2,0] |
|---|---|---|---|---|---|---|---|---|---|
| level 0 | 1 | 6 | 11 | 16 | | | | | |
| level 1 | 2 | 7 | 12 | 17 | | | | | |
| level 2 | 3 | 8 | 13 | ... | | | | | |
| level 3 | 4 | 9 | 14 | | | | | | |
| level 4 | 5 | 10 | 15 | | | | | | |

If B is smaller compared to A, a frequency modulation halftoning results that - for higher densities in an image - gives preference to increasing the number of printed halftone dots before their density is increased. Table 7 gives an example of an order number table that corresponds with a case that B is much smaller than A.

**Table 7**

| | [0,2] | [0,1] | [2,2] | [2,1] | [1,1] | [0,0] | [1,0] | [1,2] | [2,0] |
|---|---|---|---|---|---|---|---|---|---|
| level 0 | 1 | 2 | 3 | 4 | 5 | 6 | 7 | 8 | 9 |
| level 1 | 10 | 11 | 12 | 13 | 14 | 14 | 16 | 17 | 18 |
| level 2 | 19 | 20 | 21 | ... | | | | | |
| level 3 | | | | | | | | | |
| level 4 | | | | | | | | | |

In general, by varying the parameters of a function z=f(i,j), the method according to the current invention enables to control the balance between increasing a number of halftone dots or to increase the density of individual halftone dots to increase the density of a printed tint.

### abstraction

Having described in detail preferred embodiments of the current invention, it will now be apparent to those skilled in the art that numerous other modifications can be made therein without departing from the scope of the invention as defined in the appending claims. For example, although the current invention of generating a set of set of threshold masks for the purpose of multilevel halftoning has mainly be described in the context of a parent matrix that is a frequency modulation halftoning threshold mask, the invention can just as well be used when the parent matrix is an amplitude modulation halftoning threshold mask.

## Claims

1. A method for generating a set of threshold masks for converting a continuous tone image into a halftoned image having pixels that can have N density levels, the method comprising the steps of:
- initializing a parent matrix having isize by jSize elements at positions [i,j], said elements having values P[i,j];
- indexing said elements in said parent matrix by a position index y wherein said position index y is based on ordering said values P[i,j];
- indexing said N density levels by a level-index x, wherein said level index x is based on ordering said density levels;
- defining a single valued function F having a domain, wherein a first parameter of said domain corresponds to said level index x and a second parameter of said domain corresponds to said position index y;
- obtaining function values F(x,y) using said function F for multiple combinations of said level index x and said position index y;
- indexing combinations of said level index x and said position index y by an order index o, wherein said order index o is based on ordering said function values F(x,y);
- defining N children matrices corresponding to said N density levels having an index x, each child matrix having isize by jSize elements at positions [i,j], said elements having values C[i,j];
- assigning a value C[i,j] to an element having a position [i,j] in a child matrix corresponding with a level index x; the method being **characterized in that**:
- said value C[i,j] is a function of the order index o that corresponds with a function value F(x,y), wherein x is a level index that corresponds with said child matrix and y is a position index that corresponds with said position [i,j].

2. The method according to claim 1, wherein said parent matrix is a frequency modulation threshold mask.

3. The method according to claim 1 or 2, in which the function F(x,y) is a linear function.

4. The method according to anyone of the previous claims, further comprising the step of:
- using at least one of said children matrices for converting a continuous tone image into a frequency modulated halftone image.

5. The method according to claim 4, further comprising the step of:
- printing an image in response to said frequency modulated image.

6. A set of threshold masks suitable for converting a continuous tone image into a halftone image, said set of threshold masks being **characterized in that**:
- it has been generated using a method according to anyone of the claims 1 to 3.

7. An image processing system for converting a continuous tone image into a halftone image, said image processing system being
**characterized in that**:
- it comprises at least one threshold mask that is generated using a method according to anyone of the claims 1 to 3.

8. A system for printing on a printable substrate comprising:
- an image processing system; said printing system being **characterized in that**:
- said image processing system is an image processing system according to claim 4.

9. A printed substrate, said substrate being **characterized in that**:
- it is printed using a printing system according to claim 5.

10. A data processing system, said data processing system being
**characterized in that**:
- it comprises means for carrying out the steps of a method according to anyone of the claims 1 to 3.

11. A computer program, said computer program **characterized in that**:
- it comprises computer program code adapted to perform a method according to any one of the claims 1 to 3.

12. A computer readable medium, said computer readable medium
**characterized in that**:
- it comprises computer program code adapted to carry out a method according to any one of the claims 1 to 3, when executed on a computer.

## Amended claims

### Amended claims in accordance with Rule 86(2) EPC.

**1.** A method for transforming a matrix having values M[i,j] at positions [i,j] into a set of N-1 (N>2) threshold masks T[k] (k=1,..N-1) suitable for converting a continuous tone image into a halftoned image having pixels that can have N density levels, the method comprising the steps of:
- assigning first order numbers P[i,j] to every position of said matrix in response to said values M[i,j];
- assigning a set of N-1 levels L[k] (k=1,..N-1] to every position of said matrix;
said method **characterized in that** it further comprises the steps of:
- processing said order numbers P[i,j] in combination with said levels L[k] to obtain function values F(L[k],P[i,j]);
- ordering said function values to obtain second order numbers Q[k][i,j];
- scaling said second order numbers Q[k][i,j] to generate threshold values T[k][i,j] for said set of N-1 threshold masks T[k].

**2.** The method according to the previous claim, further comprising a step of:
- using said set of threshold masks for converting a continuous tone image into a halftone image.

**3.** The method according to the previous claim, further comprising a step of:
- printing said halftone image.

**4.** An image processing system for converting a continuous tone image into a halftone image having N possible density levels, said image processing system being **characterized in that**:
- it comprises a set of N-1 threshold masks that are generated using the steps of any method according to the claims 1 to 3.

**5.** A system for printing on a printable substrate comprising:
- an image processing system;
said printing system being **characterized in that**:
- said image processing system is an image processing system according to claim 4.

**6.** A data processing system, said data processing system being
**characterized in that**:
- it is configured for carrying out the steps of any method according to the claims 1 to 3.

**7.** A computer readable medium, said computer readable medium
**characterized in that**:
- it comprises computer program code adapted to carry out any method according to the claims 1 to 3 when executed on a computer.
